# EUROPÄISCHE PATENTANMELDUNG

(11) **EP 3 184 776 A1**
(43) Veröffentlichungstag der Anmeldung: **28.06.2017**
(21) Anmeldenummer: 16200495.6
(22) Anmeldetag: 24.11.2016
(51) Int. Cl.: F02B 29/04, F28F 9/02, F28F 17/00

(54) **LADELUFTKÜHLER FÜR EINE BRENNKRAFTMASCHINE SOWIE VERFAHREN ZUM BETREIBEN EINES LADELUFTKÜHLERS**

(30) Priorität: 23.12.2015 DE 102015016812
(71) Anmelder: AUDI AG, 85045 Ingolstadt (DE)
(72) Erfinder: Kopp, Andreas, 85092 Kösching (DE); Wetzka, Manuel, 85139 Wettstetten-Echenzell (DE); Fickenscher, Tobias, 85049 Ingolstadt (DE)

(57) **Zusammenfassung**

Die Erfindung betrifft einen Ladeluftkühler (1) für eine Brennkraftmaschine, mit einem Ladelufteinlass (7) und einem Ladeluftauslass, die über mehrere strömungstechnisch parallel zueinander vorliegende, von einem Kühlmittel anströmbare Ladeluftkanäle (3) strömungstechnisch miteinander verbunden sind. Dabei ist vorgesehen, dass der Ladeluftkühler (1) wenigstens ein stromaufwärts der Ladeluftkanäle (3) angeordnetes Strömungsleitelement (11) aufweist, das durch den Ladelufteinlass (7) eintretende Ladeluft zumindest in einem Betriebszustand der Brennkraftmaschine in Richtung eines Kondensatsammelvolumens (10) des Ladeluftkühlers (1) umlenkt. Die Erfindung betrifft weiterhin ein Verfahren zum Betreiben eines Ladeluftkühlers (1).

## Beschreibung

Die Erfindung betrifft einen Ladeluftkühler für eine Brennkraftmaschine, mit einem Ladelufteinlass und einem Ladeluftauslass, die über mehrere strömungstechnisch parallel zueinander vorliegende, von einem Kühlmittel anströmbare Ladeluftkanäle strömungstechnisch miteinander verbunden sind. Die Erfindung betrifft weiterhin ein Verfahren zum Betreiben eines Ladeluftkühlers für eine Brennkraftmaschine.

Der Ladeluftkühler ist der Brennkraftmaschine zugeordnet, welche beispielsweise dem Antreiben eines Kraftfahrzeugs, insoweit also dem Bereitstellen eines auf das Antreiben des Kraftfahrzeugs gerichteten Drehmoments dient. Die Brennkraftmaschine ist aufgeladen. Das bedeutet, dass ihr ein Verdichter zugeordnet ist, welcher der Brennkraftmaschine zugeführtes beziehungsweise zuzuführendes Frischgas stromaufwärts der Brennkraftmaschine verdichtet, also auf ein höheres Druckniveau bringt. Das Frischgas ist beispielsweise Frischluft oder zumindest zeitweise ein Frischluft-Abgas-Gemisch, falls die Brennkraftmaschine über eine externe Abgasrückführung verfügt. Die Aufladung bewirkt eine höhere Leistung und/oder eine höhere Effizienz der Brennkraftmaschine. Der Verdichter ist beispielsweise Bestandteil eines Laders, insbesondere eines Abgasturboladers oder eines elektrisch unterstützten Abgasturboladers, oder eines Kompressors. Der Verdichter kann auch als elektrisch angetriebener Verdichter vorliegen.

Durch das Verdichten des Frischgases mittels des Verdichters steigt die Temperatur des Frischgases aufgrund des höheren Drucks und der verrichteten Kompressionsarbeit deutlich an. Weil entsprechend die Dichte des Frischgases abnimmt, führt die Temperaturzunahme des Frischgases zu einer Verringerung der Leistungs- und/oder Effizienzerhöhung. Aus diesem Grund ist strömungstechnisch zwischen dem Verdichter und der Brennkraftmaschine der Ladeluftkühler vorgesehen. Diesem wird das mittels des Verdichters verdichtete Frischgas, nachfolgend auch als Ladeluft bezeichnet, durch den Ladelufteinlass zugeführt. Anschließend durchströmt die Ladeluft die strömungstechnisch parallel zueinander angeordneten Ladeluftkanäle, um anschließend durch den Ladeluftauslass aus dem Ladeluftkühler auszuströmen. Nachfolgend wird die Ladeluft beziehungsweise das verdichtete Frischgas der Brennkraftmaschine zugeführt.

Entsprechend ist der Ladelufteinlass strömungstechnisch gesehen auf der dem Verdichter zugewandten Seite des Ladeluftkühlers und der Ladeluftauslass auf der der Brennkraftmaschine zugewandten Seite angeordnet. Über die Ladeluftkanäle ist der Ladeluftauslass strömungstechnisch mit dem Ladelufteinlass verbunden, insbesondere ausschließlich. Die Ladeluftkanäle sind vorzugsweise parallel zueinander angeordnet, beispielsweise verlaufen also ihre Längsmittelachsen parallel zueinander. Bevorzugt sind die Ladeluftkanäle beabstandet voneinander, insbesondere parallel beabstandet voneinander, angeordnet, sodass zwischen ihnen Kühlmittel hindurchströmen kann. Das Kühlmittel dient dem Abführen von Wärme der Ladeluft. Entsprechend weist das Kühlmittel bevorzugt eine niedrigere Temperatur auf als die die Ladeluftkanäle durchströmende Ladeluft.

In der Ladeluft ist üblicherweise ein gewisser Wasseranteil enthalten. Wird die Ladeluft in den Ladeluftkanälen stark abgekühlt, insbesondere bis unter ihren Taupunkt, so fällt dieses Wasser als Kondensat aus der Ladeluft aus. Bei einem großen Ladeluftmassenstrom durch den Ladeluftkühler wird das Kondensat zum größten Teil unverzüglich von der Ladeluft mitgenommen und gemeinsam mit dieser der Brennkraftmaschine zugeführt. Der der Brennkraftmaschine zugeführte Massenstrom an Kondensat beziehungsweise flüssigem Wasser ist dabei derart gering, dass keine Nachteile zu erwarten ist.

Ist jedoch der Abgasmassenstrom gering, beispielsweise in einem Teillastbereich der Brennkraftmaschine, so kann sich das anfallende Kondensat in dem Ladeluftkühler, insbesondere in den Ladeluftkanälen, ansammeln. Bei einem nachfolgenden Anstieg des Ladeluftmassenstroms können nun große Mengen an Kondensat von der Ladeluft mitgenommen werden und in die Brennkraftmaschine gelangen. Weil dies zu verbrennungstechnischen Nachteilen in der Brennkraftmaschine führen kann, können Mittel vorgesehen sein, um das flüssige Wasser aus dem Ladeluftkühler abzuführen. Diese sind jedoch häufig konstruktiv sehr aufwändig und kostenträchtig.

Es ist daher Aufgabe der Erfindung, einen Ladeluftkühler für eine Brennkraftmaschine vorzuschlagen, welcher gegenüber bekannten Ladeluftkühlern Vorteile aufweist, insbesondere ein Ansammeln von Kondensat in dem Ladeluftkühler zuverlässig verhindert.

Dies wird mit einem Ladeluftkühler mit den Merkmalen des Anspruchs 1 erreicht. Dabei ist vorgesehen, dass der Ladeluftkühler wenigstens ein stromaufwärts der Ladeluftkanäle angeordnetes Strömungsleitelement aufweist, das durch den Ladelufteinlass eintretende Ladeluft zumindest in einem Betriebszustand der Brennkraftmaschine in Richtung eines Kondensatsammelvolumens des Ladeluftkühlers umlenkt.

Das Luftleitelement ist also beispielsweise dem Ladelufteinlass zugeordnet und dient der Umlenkung der durch den Ladelufteinlass einströmenden und/oder in Richtung der Ladeluftkanäle strömenden Ladeluft. Die Umlenkung der Ladeluft durch das Strömungsleitelement erfolgt dabei derart, dass sie in Richtung des Kondensatsammelvolumens des Ladeluftkühlers strömt. Das Kondensatsammelvolumen wird beispielsweise von wenigstens einem der Ladeluftkanäle, insbesondere einem geodätisch gesehen am niedrigsten liegenden der Ladeluftkanäle gebildet. In diesen wird das anfallende Kondensat aufgrund des Schwerkrafteinflusses gedrängt.

Das Umlenken der Ladeluft mithilfe des Strömungsleitelements ist zumindest in dem wenigstens einen Betriebszustand der Brennkraftmaschine vorgesehen. Bevorzugt ist das Strömungsleitelement dabei derart angeordnet, dass es auch bei kleinen Ladeluftmassenströmen für ein Einströmen der Ladeluft in das Kondensatsammelvolumen, also insbesondere in den das Kondensatsammelvolumen aufweisenden Ladeluftkanal beziehungsweise die das Kondensatsammelvolumen aufweisenden Ladeluftkanäle, sorgt. Auf diese Art und Weise wird auch bei kleinen Ladeluftmassenströmen verhindert, dass sich das Kondensat in dem Ladeluftkühler, insbesondere in dem Kondensatsammelvolumen ansammelt. Auch bei einer plötzlichen Erhöhung des Ladeluftmassenstroms kann es somit nicht zu einem abrupten Anstieg der der Brennkraftmaschine zugeführten Kondensatmenge kommen, sodass die verbrennungstechnischen Nachteile vermieden werden.

Das Strömungsleitelement wird bevorzugt unmittelbar von der durch den Ladelufteinlass eintretenden Ladeluft angeströmt. Vorzugsweise liegt es strömungstechnisch zwischen dem Ladelufteinlass und einem dem Ladelufteinlass am nächsten liegenden der Ladeluftkanäle vor. Ohne das Strömungsleitelement würde die Ladeluft bevorzugt in diesen, dem Ladelufteinlass am nächsten liegenden Ladeluftkanal einströmen. Das Strömungsleitelement lenkt die Ladeluft jedoch von diesem fort, sodass sie in Richtung eines weiter von dem Ladelufteinlass angeordnet der Ladeluftkanäle strömt, insbesondere in diesen einströmt. Dieser Ladeluftkanal weist bevorzugt das Kondensatsammelvolumen wenigstens teilweise auf.

Eine weitere Ausgestaltung der Erfindung sieht eine Ausgestaltung des Ladeluftkühlers als direkter Ladeluftkühler, wobei das Kühlmittel Umgebungsluft ist, oder als indirekter Ladeluftkühler, wobei das Kühlmittel ein Kühlfluid, insbesondere ein Kältemittel ist, vor. Die direkte Ladeluftkühlung ist derart angeordnet, dass er unmittelbar von Umgebungsluft durchströmt werden kann. Die Umgebungsluft soll also beispielsweise aufgrund eines geschwindigkeitsinduzierten Umgebungsluftstroms die Ladeluftkanäle anströmen und/oder umströmen beziehungsweise zwischen ihnen hindurchströmen.

Alternativ kann der Ladeluftkühler selbstverständlich als indirekter Ladeluftkühler ausgestaltet sein. In diesem Fall ist er nicht unmittelbar dem geschwindigkeitsinduzierten Umgebungsluftstrom ausgesetzt. Vielmehr wird dem Ladeluftkühler das Kühlfluid zugeführt, welches zumindest zeitweise flüssig sein kann und vorzugsweise in einem Kühlkreislauf, insbesondere einem Kühlkreislauf der Brennkraftmaschine, umgewälzt wird. Das Kühlfluid kann in Form eines Kältemittels vorliegen.

Eine weitere Ausgestaltung der Erfindung sieht vor, dass das Kondensatsammelvolumen in wenigstens einem geodätisch zuunterst liegenden der Ladeluftkanäle vorliegt. Wie bereits vorstehend erläutert, wird das in dem Ladeluftkühler anfallende Kondensat durch Schwerkrafteinfluss geodätisch gesehen nach unten gedrängt. Entsprechend sammelt es sich zunächst in dem in Einbaulage zuunterst liegenden der Ladeluftkanäle. Selbstverständlich kann sich ein Teil des Kondensats jedoch auch in mehreren der Ladeluftkanäle ansammeln, insbesondere den geodätisch zuunterst liegenden Ladeluftkanälen des Ladeluftkühlers.

Im Rahmen einer weiteren Ausgestaltung der Erfindung kann vorgesehen sein, dass strömungstechnisch zwischen dem Ladelufteinlass und den Ladeluftkanälen ein Ladeluftverteilkasten vorliegt, in dem das Strömungsleitelement angeordnet ist. Der Ladelufteinlass ist beispielsweise eine Mündungsöffnung einer Ladeluftleitung in den Ladeluftverteilkasten, wobei über die Ladeluftleitung dem Ladeluftkühler die Ladeluft zugeführt wird. In Richtung der größten Erstreckung der Gesamtheit der Ladeluftkanäle des Ladeluftkühlers weist üblicherweise die Ladeluftleitung beziehungsweise ihre Mündungsöffnung kleinere Abmessungen auf als die Ladeluftkanäle.

Entsprechend ist es notwendig, die Ladeluft aufzufächern, sodass sie den Ladeluftkanälen zugeführt werden kann. Zu diesem Zweck ist der Ladeluftverteilkasten vorgesehen, in welchen einerseits die Ladeluftleitung einmündet und von welchem andererseits die Ladeluftkanäle ausgehen. Der Ladeluftverteilkasten arbeitet insoweit nach Art eines Diffusors. Beispielsweise mündet die Ladeluftleitung geodätisch gesehen in etwa mittig in den Ladeluftverteilkasten ein. Auf der dem Ladeluftverteilkasten gegenüberliegenden Seite der Ladeluftkanäle können diese in einen Ladeluftsammelkasten einmünden. Diesem ist der Ladeluftauslass zugeordnet. In dem Ladeluftsammelkasten wird insoweit die die Ladeluftkanäle durchströmende Ladeluft zusammengeführt und anschließend gemeinsam in Richtung der Brennkraftmaschine abgeführt.

Das Strömungsleitelement ist bevorzugt in dem Ladeluftverteilkasten angeordnet, insbesondere im Bereich der Mündungsöffnung. Entsprechend wird das Strömungsleitelement unmittelbar von der in den Ladeluftverteilkasten einströmenden Ladeluft angeströmt, nicht etwa erst nach eine Umlenkung durch den Ladeluftverteilkasten beziehungsweise einer Wand des Ladeluftverteilkastens. Das Strömungsleitelement liegt in dem Ladeluftverteilkasten vor, insbesondere geht es von der Wand des Ladeluftverteilkastens vor. Dabei ist es vorzugsweise an der Wand befestigt oder gelagert. Insbesondere erstreckt sich das Strömungsleitelement in wenigstens einer Richtung durch den gesamten Ladeluftverteilkasten, also von einer Wand zu einer gegenüberliegenden Wand des Ladeluftverteilkastens. Es kann jedoch auch vorgesehen sein, dass das Strömungsleitelement den Ladeluftverteilkasten nur teilweise durchgreift, also nur einen Teil des Abstands zwischen den gegenüberliegenden Wänden überbrückt. Dieser Teil entspricht bezogen auf den Abstand zwischen den Wänden beispielsweise mindestens 25 %, mindestens 50 %, mindestens 75 %, mindestens 90 % oder mindestens 95 %.

Eine Weiterbildung der Erfindung sieht vor, dass die Ladeluft in den Ladeluftverteilkasten durch den Ladelufteinlass mit einer Einströmrichtung einströmt, die in einer senkrecht auf einer Längsmittelebene der Ladeluftkanäle stehenden Strömungsebene liegt, wobei das Strömungsleitelement die Ladeluft derart umlenkt, dass sie von der Strömungsebene fortströmt. Die Längsmittelebene der Ladeluftkanäle ist eine Ebene, die die Längsmittelachsen mehrerer der Ladeluftkanäle, insbesondere aller Ladeluftkanäle des Ladeluftkühlers, in sich aufnimmt. Entsprechend erstreckt sie sich zum Beispiel in geodätisch senkrechter Richtung oder schließt mit dieser einen geringen Winkel von höchstens 15 °, höchstens 10 ° oder höchstens 5° ein.

Die Strömungsebene steht senkrecht auf dieser Längsmittelebene und nimmt gleichzeitig die Einströmrichtung der Ladeluft in den Ladeluftverteilkasten in sich auf. Die Einströmrichtung bezeichnet dabei bevorzugt die Hauptströmungsrichtung der in den Ladeluftverteilkasten eintretenden Ladeluft. Das Strömungsleitelement ist derart in dem Ladeluftstrom angeordnet, dass diese in eine von der Strömungsebene abgewandte Richtung umgelenkt wird. Das Umlenken erfolgt dabei bevorzugt in Richtung einer geodätisch unten liegenden Seite der Strömungsebene.

Im Rahmen einer weiteren Ausgestaltung der Erfindung kann vorgesehen sein, dass das Strömungsleitelement ein Strömungsprofil aufweist. Beispielsweise ist das Strömungsleitelement also tragflächenartig. Mit einer derartigen Ausgestaltung des Strömungsleitelements kann eine Beschleunigung der umgelenkten Ladeluft erzielt werden. Aufgrund der höheren Geschwindigkeit kann die Ladeluft einen größeren Anteil des in dem Kondensatsammelvolumen vorliegenden Kondensats in Richtung der Brennkraftmaschine mitnehmen. Dies gilt insbesondere, falls mehrere Strömungsleitelemente vorliegen, welche vorzugsweise beabstandet voneinander in dem Ladeluftverteilkasten angeordnet sind.

Schließlich kann in einer weiteren Ausgestaltung der Erfindung vorgesehen sein, dass das Strömungsleitelement verstellbar ist. Dem Strömungsleitelement ist insoweit eine Stellvorrichtung zugeordnet, mittels welchem beispielsweise ein Anstellwinkel des Strömungsleitelements einstellbar ist. Der Anstellwinkel kann dabei in Abhängigkeit von dem Betriebszustand der Brennkraftmaschine, insbesondere in Abhängigkeit von einem Ladeluftmassenstrom, ausgewählt und eingestellt werden. Durch die Verstellbarkeit des Strömungsleitelements kann beispielsweise in einem Teillastbereich der Brennkraftmaschine, also bei einem geringeren Ladeluftmassenstrom, eine stärkere Umlenkung der Ladeluft realisiert werden als bei Volllast, für welche ein größerer Ladeluftmassenstrom vorliegt.

In letzterem Fall wird das Kondensat auch ohne die Umlenkung der Ladeluft durch das Strömungsleitelement in ausreichender Menge aus dem Ladeluftkühler abgeführt. Gleichzeitig wird durch die geringere Umlenkung der Druckverlust des Ladeluftkühlers für die Ladeluft verringert. Besonders bevorzugt liegt in wenigstens einem Betriebszustand der Brennkraftmaschine, beispielsweise bei Volllast, überhaupt keine Umlenkung der Ladeluft durch das Strömungsleitelement vor oder zumindest lediglich eine Umlenkung, die einer mittels des Strömungsleitelements minimal einstallbaren Umlenkung entspricht.

Im Rahmen einer besonders bevorzugten Vorgehensweise wird das verstellbare Strömungsleitelement dazu verwendet, die Ladeluft periodisch unterschiedlichen Ladeluftkanälen zuzuführen. Beispielsweise wird hierzu eine Reihenfolge vorgegeben, in Richtung welchen Ladeluftkanals die Ladeluft mittels des Strömungsleitelements umgelenkt werden soll. Die Ladeluftkanäle, in deren Richtung die Ladeluft umgelenkt werden soll, bilden bevorzugt eine Untermenge aller Ladeluftkanäle des Ladeluftkühlers. Diese Untermenge kann nur einen Teil der Ladeluftkanäle, aber auch alle Ladeluftkanäle umfassen. Ist nur ein Teil umfasst, so enthält die Untermenge mehrere bevorzugt in geodätischer Richtung weiter unten liegende Ladeluftkanäle, insbesondere mehrere in dieser Richtung am tiefsten liegende Ladeluftkanäle.

Das Strömungsleitelement wird nun dazu verwendet, die Ladeluft periodisch jeweils in Richtung eines in der Untermenge enthaltenen Ladeluftkanals umzulenken, sodass dieser hauptsächlich mit der Ladeluft beaufschlagt wird. Beispielsweise wird in bestimmten Zeitabständen auf einen anderen Ladeluftkanal der Untermenge umgeschaltet, sodass innerhalb eines Entwässerungszyklusses die Ladeluft jeweils in Richtung jedes in der Untermenge enthaltenen Ladeluftkanals umgelenkt wird. Somit wird in dem Entwässerungszyklus jeder in der Untermenge enthaltene Ladeluftkanal zumindest einmalig hauptsächlich mit der Ladeluft beaufschlagt beziehungsweise die Ladeluft in seine Richtung umgelenkt. Entsprechend wird das Kondensat besonders effektiv aus ihm ausgetragen. Zudem kann in dem jeweiligen Ladeluftkanal bereits die Bildung des Kondensats verhindert werden.

Bei einer derartigen Vorgehensweise wird das Strömungsleitelement periodisch verstellt, sodass die Ladeluft in Richtung unterschiedlicher Ladeluftkanäle umgelenkt wird. Während des Entwässerungszyklusses überstreicht also die Ladeluft durch das Verstellen des Strömungsleitelements mehrere der Ladeluftkanäle, insbesondere alle Ladeluftkanäle. Das periodische Verstellen kann permanent durchgeführt werden oder in Abhängigkeit von wenigstens einer Umgebungsbedingung und/oder dem Betriebszustand der Brennkraftmaschine. Als Umgebungsbedingung kommt beispielsweise eine Umgebungstemperatur zum Einsatz. Insbesondere wird das Verstellen nur bei Unterschreiten eines Temperaturschwellenwerts durch die Umgebungstemperatur vorgenommen. Alternativ oder zusätzlich wird das Verstellen nur durchgeführt, wenn ein bestimmter Betriebszustand der Brennkraftmaschine vorliegt, diese insbesondere bei Teillast betrieben wird. Bei Volllast und/oder bei Überschreiten des Temperaturschwellwerts dagegen kann das Strömungsleitelement derart eingestellt werden, dass ein möglichst geringer Druckverlust beziehungsweise Strömungswiderstand vorliegt, also insbesondere so, dass die Ladeluft nicht umgelenkt wird oder zumindest die minimal einstallbare Umlenkung vorliegt.

Die Erfindung betrifft weiterhin ein Verfahren zum Betreiben eines Ladeluftkühlers für eine Brennkraftmaschine, insbesondere eines Ladeluftkühlers gemäß den vorstehenden Ausführungen, wobei der Ladeluftkühler einen Ladelufteinlass und einen Ladeluftauslass aufweist, die über mehrere strömungstechnisch parallel zueinander vorliegende, von einem Kühlmittel anströmbare Ladeluftkanäle strömungstechnisch miteinander verbunden sind. Dabei ist vorgesehen, dass der Ladeluftkühler wenigstens ein stromaufwärts der Ladeluftkanäle angeordnetes Strömungsleitelement aufweist, das durch den Ladelufteinlass eintretende Ladeluft zumindest in einem Betriebszustand der Brennkraftmaschine in Richtung eines Kondensatsammelvolumens des Ladeluftkühlers umlenkt.

Auf die Vorteile einer derartigen Vorgehensweise beziehungsweise einer derartigen Ausgestaltung des Ladeluftkühlers wurde bereits hingewiesen. Sowohl das Verfahren als auch der Ladeluftkühler können gemäß den vorstehenden Ausführungen weitergebildet sein, sodass insoweit auf diese verwiesen wird.

Im Rahmen einer weiteren Ausgestaltung der Erfindung kann vorgesehen sein, dass das Strömungsleitelement verstellbar ist und ein Anstellwinkel des Strömungsleitelements in Abhängigkeit von dem Betriebszustand ausgewählt und eingestellt wird. Hierauf wurde vorstehend bereits hingewiesen. Beispielsweise wird in Abhängigkeit von wenigstens einer Betriebsgröße der Brennkraftmaschine der Anstellwinkel bestimmt, insbesondere berechnet. Als Betriebsgröße kann beispielsweise das Drehmoment, die Drehzahl der Brennkraftmaschine oder der Ladeluftmassenstrom verwendet werden. Die Bestimmung des Anstellwinkels erfolgt anhand genau einer der genannten Betriebsgrößen oder mehrerer der Betriebsgrößen, insbesondere aller genannten Betriebsgrößen.

Schließlich ist in einer weiteren bevorzugten Ausführungsform der Erfindung vorgesehen, dass das Strömungsleitelement derart eingestellt wird, dass die Ladeluft umso stärker umgelenkt wird, je kleiner ein den Ladeluftkühler durchströmender Ladeluftmassenstrom ist, und/oder umso stärker umgelenkt wird, je größer der Ladeluftmassenstrom ist. Besonders bevorzugt erfolgt ab dem Überschreiten eines Ladeluftmassenstromgrenzwerts durch den Ladeluftmassenstrom keine Umlenkung der Ladeluft durch das Strömungsleitelement.

Ist der Ladeluftmassenstrom jedoch kleiner als der Ladeluftmassenstromgrenzwert, so kann die Umlenkung umso stärker eingestellt werden, je geringer der Ladeluftmassenstrom ist. Auf diese Weise wird sichergestellt, dass einerseits bei einem geringeren Ladeluftmassenstrom das Kondensat zuverlässig aus dem Ladeluftkühler abgeführt und andererseits bei einem größeren Ladeluftmassenstrom ein geringer Druckverlust des Ladeluftkühlers sichergestellt wird.

Die Erfindung wird nachfolgend anhand der in der Zeichnung dargestellten Ausführungsbeispiele näher erläutert, ohne dass eine Beschränkung der Erfindung erfolgt. Dabei zeigt:
- Figur 1: eine schematische Schnittdarstellung eines Ladeluftkühlers für eine Brennkraftmaschine in einer ersten Ausführungsform, sowie
- Figur 2: eine schematische Schnittdarstellung des Ladeluftkühlers in einer zweiten Ausführungsform.

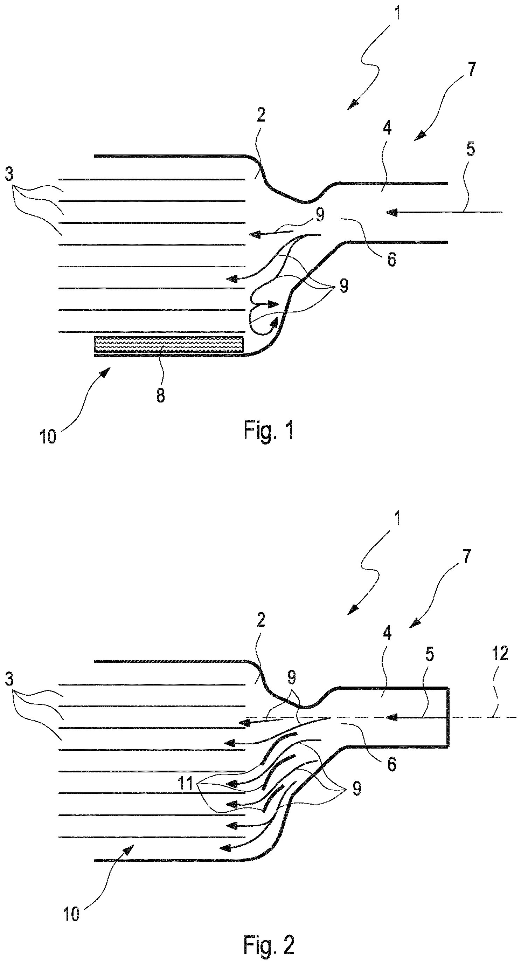

Die Figur 1 zeigt eine schematische Darstellung eines Bereichs eines Ladeluftkühlers 1, der einen Ladeluftverteilkasten 2 sowie von diesem ausgehende Ladeluftkanäle 3 (von welchen hier lediglich einige beispielhaft gekennzeichnet sind) aufweist. Dem Ladeluftverteilkasten 2 wird über eine Ladeluftleitung 4 Ladeluft zugeführt, wobei eine Einströmrichtung der Ladeluft durch den Pfeil 5 angedeutet ist. Die Ladeluftleitung 4 mündet an einer Mündungsöffnung 6 in den Ladeluftverteilkasten 2 ein.

Es wird deutlich, dass sich stromabwärts der Mündungsöffnung 6 der Durchströmungsquerschnitt aufweitet, weil die Ladeluftkanäle 3 in ihrer Gesamtheit in wenigstens einer Richtung größere Abmessungen aufweisen als die Ladeluftleitung 4 beziehungsweise die Mündungsöffnung 6. Die Ladeluftleitung 4 ist einem Ladelufteinlass 7 des Ladeluftkühlers 1 zugeordnet. Die in den Ladeluftverteilkasten 2 einströmende Ladeluft tritt in die Ladeluftkanäle 3 oder zumindest einen Teil der Ladeluftkanäle 3 ein und durchströmt diese. Auf der dem Ladeluftverteilkasten 2 abgewandten Seite der Ladeluftkanäle 3 sind diese bevorzugt an einen Ladeluftsammelkasten angeschlossen, welcher einem Ladeluftauslass (hier nicht dargestellt) des Ladeluftkühlers 1 zugeordnet ist.

Insbesondere bei einem geringen Ladeluftmassenstrom kann es vorkommen, dass die in den Ladeluftverteilkasten 2 eintretende Ladeluft bevorzugt auf die in Strömungsrichtung, also in Richtung des Pfeils 5, liegenden Ladeluftkanäle 3 aufgeteilt wird, während abseits liegende Ladeluftkanäle 3 nicht oder allenfalls geringfügig mit Ladeluft beaufschlagt werden. Weil die Ladeluft in dem Ladeluftkühler 1 abgekühlt wird, kann in diesem, falls das Abkühlen bis unter den Taupunkt erfolgt, Wasser kondensieren und nachfolgend in Form von Kondensat 8 in dem Ladeluftkühler 1 vorliegen.

Aufgrund des Schwerkrafteinflusses sammelt sich das Kondensat 8 bevorzugt in einem geodätisch zuunterst liegenden der Ladeluftkanäle 3, wie hier angedeutet ist. Gleichzeitig wird dieser aufgrund seines Abstands von der Mündungsöffnung 6 jedoch nicht mehr ausreichend von Ladeluft durchströmt, um das Kondensat abzuführen. Dies ist durch die Pfeile 9 angedeutet. Vielmehr wird deutlich, dass es sogar zur Bildung von Rückströmgebieten kommen kann, welche das Eintreten der Ladeluft in den das Kondensat 8 aufweisenden der Ladeluftkanäle 3 weitgehend verhindert. Der Bereich, in welchem sich das Kondensat 8 ansammelt, kann als Kondensatsammelvolumen 10 bezeichnet werden.

Um auch bei niedrigen Ladeluftmassenströmen ein gleichmäßiges Abführen des Kondensats 8 aus dem Ladeluftkühler 1 zu ermöglichen, ist dem Ladeluftkühler 1 in seiner in der Figur 2 dargestellten zweiten Ausführungsform wenigstens ein Strömungsleitelement 11 zugeordnet. In dem dargestellten Ausführungsbeispiel sind mehrere Strömungsleitelemente 11 vorgesehen, die beabstandet voneinander angeordnet sind. Das Strömungsleitelement liegt bevorzugt in dem Ladeluftverteilkasten 2 vor. Das Strömungsleitelement 11 ist derart ausgerichtet, dass die durch den Ladelufteinlass 7 einströmende Ladeluft zumindest in einem Betriebszustand der Brennkraftmaschine in Richtung des Kondensatsammelvolumens 10 umgelenkt wird. Dieses liegt, wie bereits vorstehend erläutert, in dem wenigstens einen geodätisch zuunterst liegenden der Ladeluftkanäle 3 vor.

Die Umlenkung der Ladeluft durch das Strömungsleitelement 11 folgt dabei bevorzugt fort von einer hier lediglich angedeuteten Strömungsebene 12, die die durch den Pfeil 5 angedeutete Einströmrichtung in sich aufnimmt und zudem senkrecht auf einer Längsmittelebene der Ladeluftebene 3 steht. Insbesondere lenkt das Strömungsleitelement 11 die Ladeluft in Richtung des geodätisch zuunterst liegenden der Ladeluftkanäle 3 um. Durch die Pfeile 9 wird deutlich, dass mithilfe des Strömungsleitelements 11 eine Vergleichmäßigung des Ladeluftmassenstroms durch die Ladeluftkanäle 3 erzielt werden kann oder dass sogar der größere Teil der Ladeluft durch die am weitesten unten liegenden der Ladeluftkanäle 3 strömt.

Auch bei niedrigen Ladeluftmassenströmen wird auf diese Art und Weise das Kondensat 8 zuverlässig aus dem Kondensatsammelvolumen 10 abgeführt und in Richtung der Brennkraftmaschine mitgenommen. Auch bei einem plötzlichen Anstieg des Ladeluftmassenstroms kann es also nicht zu einem abrupten Anstieg der von der Ladeluft mitgenommenen Kondensatmenge kommen. Entsprechend wird ein negativer Einfluss auf den Betrieb der Brennkraftmaschine zuverlässig verhindert.

## Patentansprüche

1. Ladeluftkühler (1) für eine Brennkraftmaschine, mit einem Ladelufteinlass (7) und einem Ladeluftauslass, die über mehrere strömungstechnisch parallel zueinander vorliegende, von einem Kühlmittel anströmbare Ladeluftkanäle (3) strömungstechnisch miteinander verbunden sind, **dadurch gekennzeichnet, dass** der Ladeluftkühler (1) wenigstens ein stromaufwärts der Ladeluftkanäle (3) angeordnetes Strömungsleitelement (11) aufweist, das durch den Ladelufteinlass (7) eintretende Ladeluft zumindest in einem Betriebszustand der Brennkraftmaschine in Richtung eines Kondensatsammelvolumens (10) des Ladeluftkühlers (1) umlenkt.

2. Ladeluftkühler nach Anspruch 1, **gekennzeichnet durch** eine Ausgestaltung als direkter Ladeluftkühler (1), wobei das Kühlmittel Umgebungsluft ist, oder als indirekter Ladeluftkühler (1), wobei das Kühlmittel ein Kühlfluid, insbesondere ein Kältemittel, ist.

3. Ladeluftkühler nach einem der vorhergehenden Ansprüche, **dadurch gekennzeichnet, dass** das Kondensatsammelvolumen (10) in wenigstens einem geodätisch zuunterst liegenden der Ladeluftkanäle (3) vorliegt.

4. Ladeluftkühler nach einem der vorhergehenden Ansprüche, **dadurch gekennzeichnet, dass** strömungstechnisch zwischen dem Ladelufteinlass (7) und den Ladeluftkanälen (3) ein Ladeluftverteilkasten (2) vorliegt, in dem das Strömungsleitelement (11) angeordnet ist.

5. Ladeluftkühler nach einem der vorhergehenden Ansprüche, **dadurch gekennzeichnet, dass** die Ladeluft in den Ladeluftverteilkasten (2) durch den Ladelufteinlass (7) mit einer Einströmrichtung (5) einströmt, die in einer senkrecht auf einer Längsmittelebene der Ladeluftkanäle (3) stehenden Strömungsebene (12) liegt, wobei das Strömungsleitelement (11) die Ladeluft derart umlenkt, dass sie von der Strömungsebene (12) fort strömt.

6. Ladeluftkühler nach einem der vorhergehenden Ansprüche, **dadurch gekennzeichnet, dass** das Strömungsleitelement (11) ein Strömungsprofil aufweist.

7. Ladeluftkühler nach einem der vorhergehenden Ansprüche, **dadurch gekennzeichnet, dass** das Strömungsleitelement (11) verstellbar ist.

8. Verfahren zum Betreiben eines Ladeluftkühlers (1) für eine Brennkraftmaschine, insbesondere eines Ladeluftkühlers (1) nach einem oder mehreren der vorhergehenden Ansprüche, wobei der Ladeluftkühler (1) einen Ladelufteinlass (7) und einen Ladeluftauslass aufweist, die über mehrere strömungstechnisch parallel zueinander vorliegende, von einem Kühlmittel anströmbare Ladeluftkanäle (3) strömungstechnisch miteinander verbunden sind, **dadurch gekennzeichnet, dass** der Ladeluftkühler (1) wenigstens ein stromaufwärts der Ladeluftkanäle (3) angeordnetes Strömungsleitelement (11) aufweist, das durch den Ladelufteinlass (7) eintretende Ladeluft zumindest in einem Betriebszustand der Brennkraftmaschine in Richtung eines Kondensatsammelvolumens (10) des Ladeluftkühlers (1) umlenkt.

9. Verfahren nach Anspruch 8, **dadurch gekennzeichnet, dass** das Strömungsleitelement (11) verstellbar ist und ein Anstellwinkel des Strömungsleitelements (11) in Abhängigkeit von dem Betriebszustand ausgewählt und eingestellt wird.

10. Verfahren nach einem der vorhergehenden Ansprüche, **dadurch gekennzeichnet, dass** das Strömungsleitelement (11) derart eingestellt wird, dass die Ladeluft umso stärker umgelenkt wird, je kleiner ein den Ladeluftkühler (1) durchströmender Ladeluftmassenstrom ist, und/oder umso stärker umgelenkt wird, je größer der Ladeluftmassenstrom ist.
